# EUROPEAN PATENT APPLICATION

(11) **EP 2 806 677 A1**
(43) Date of publication of application: **26.11.2014**
(21) Application number: 12866042.0
(22) Date of filing: 20.01.2012
(51) Int. Cl.: H04W 24/02

(54) **METHOD FOR ANALYZING LINK FAILURE CAUSE, AND NETWORK OPTIMIZING METHOD AND DEVICE THEREOF**

(71) Applicant: Fujitsu Limited, Kawasaki-shi, Kanagawa 211-8588 (JP)
(72) Inventor: LI, Zhaojun, Beijing 100025 (CN); WANG, Weiwei, Beijing 100025 (CN); CHANG, Ningjuan, Beijing 100025 (CN)
(74) Representative: Ward, James Norman
(86) International application number: PCT/CN2012/070667
(87) International publication number: WO 2013/107044

(57) **Abstract**

A method for analyzing a cause of link failure, a method of network optimization and an apparatus. The method includes: determining, when link failure occurs, detailed triggering information causing the link failure; analyzing a cause of link failure according to the detailed triggering information causing the link failure; and transmitting the cause of link failure obtained by analysis to a network side. With the embodiments of the present invention, the UE may transmit detailed causes in detailed configuration information obtained by analysis to the network side, so that the network side determines a root cause of link failure according to the cause or according to the cause in combination with a measurement result, so as to take corresponding measures to optimize the network more accurately.

## Description

### Technical Field

The present invention relates to the field of communications, and in particular to a method for analyzing a cause of link failure, a method of network optimization and an apparatus.

### Background Art

In a self-optimizing network (SON), after link failure occurs in terminal equipment, the terminal equipment will provide relevant information on the local cell and neighboring cells in the link failure, such as measurement information and location information, etc., to a network side. Then the network side will analyze a cause of the link failure according to the information, so as to take corresponding measures to optimize performance of the system.

In the implementation of the present invention, the inventors found that a defect of the prior art resides in that as there are many causes for link failure, the relevant information on the local cell and neighboring cells in the link failure, such as measurement information and location information, etc., provided by the terminal equipment to the network side, is unable to make the network side to take a corresponding optimizing mechanism.

### Summary of the Invention

An object of the embodiments of the present invention is to provide a method for analyzing a cause of link failure, a method of network optimization and an apparatus. With the methods, detailed information on link failure is provided to a network side, thereby making the network side to optimize the network more accurately.

According to one aspect of the embodiments of the present invention, there is provided a method for analyzing a cause of link failure, including:
determining, when link failure occurs, detailed triggering information causing the link failure;
analyzing a cause of link failure according to the detailed triggering information causing the link failure; and
transmitting the cause of link failure obtained by analysis to a network side.

According to another aspect of the embodiments of the present invention, there is provided an apparatus for analyzing a cause of link failure, including:
a first processing unit configured to determine, when link failure occurs, detailed triggering information causing the link failure;
a second processing unit configured to analyze a cause of link failure according to the detailed triggering information causing the link failure; and
a first transmitting unit configured to transmit the cause of link failure obtained by analysis to a network side.

According to a further aspect of the embodiments of the present invention, there is provided a method for analyzing a cause of link failure, including:
acquiring a cause of link failure transmitted by a user side; and
determining a cause of link failure, according to the acquired cause of link failure, or according to the acquired cause of link failure in combination with a measurement result.

According to still another aspect of the embodiments of the present invention, there is provided a method of network optimization, including:

Acquiring a cause of link failure transmitted by a user side;
determining a cause of link failure, according to the acquired cause of link failure, or according to the acquired cause of link failure in combination with a measurement result; and
optimizing a network according to the determined cause of link failure.

According to still another aspect of the embodiments of the present invention, there is provided an apparatus for analyzing a cause of link failure, including:
a third processing unit configured to acquire a cause of link failure transmitted by a user side; and
a fourth processing unit configured to determine a cause of link failure, according to the acquired cause of link failure, or according to the acquired cause of link failure in combination with a measurement result.

According to still another aspect of the embodiments of the present invention, there is provided an apparatus of network optimization, including:
a fifth processing unit configured to acquire a cause of link failure transmitted by a user side; and
a sixth processing unit configured to determine a cause of link failure, according to the acquired cause of link failure, or according to the acquired cause of link failure in combination with a measurement result ; and
a first optimizing unit configured to optimize a network according to the determined cause of link failure.

According to still another aspect of the embodiments of the present invention, there is provided a method for analyzing a cause of link failure, including:
determining, when link failure occurs, detailed triggering information causing the link failure; and
transmitting the detailed triggering information, as a cause of link failure, to a network side.

According to still another aspect of the embodiments of the present invention, there is provided an apparatus for analyzing a cause of link failure, including:
a seventh processing unit configured to determine, when link failure occurs, detailed triggering information causing the link failure; and
a second transmitting unit configured to transmit the detailed triggering information, as a cause of link failure, to a network side.

According to still another aspect of the embodiments of the present invention, there is provided a method for analyzing a cause of link failure, including:
acquiring detailed triggering information causing the link failure transmitted by a user side; and
determining a cause of link failure, according to the acquired detailed triggering information, or according to the acquired detailed triggering information in combination with a measurement result.

According to still another aspect of the embodiments of the present invention, there is provided an apparatus for analyzing a cause of link failure, including:
an eighth processing unit configured to acquire detailed triggering information causing the link failure transmitted by a user side; and
a ninth processing unit configured to determine a cause of link failure, according to the acquired detailed triggering information, or according to the acquired detailed triggering information in combination with a measurement result.

According to still another aspect of the embodiments of the present invention, there is provided a method of network optimization, including:
acquiring detailed triggering information causing the link failure transmitted by a user side;
determining a cause of link failure, according to the acquired detailed triggering information, or according to the acquired detailed triggering information in combination with a measurement result; and
optimizing a network according to the determined cause of link failure.

According to still another aspect of the embodiments of the present invention, there is provided an apparatus of network optimization, including:
a tenth processing unit configured to acquire detailed triggering information causing the link failure transmitted by a user side;
an eleventh processing unit configured to determine a cause of link failure, according to the acquired detailed triggering information, or according to the acquired detailed triggering information in combination with a measurement result; and
a second optimizing unit configured to optimize a network according to the determined cause of link failure.

According to still another aspect of the embodiments of the present invention, there is provided a computer-readable program, wherein when the program is executed in an apparatus for analyzing a cause of link failure, the program enables a computer to carry out the method for analyzing a cause of link failure as described above in the apparatus.

According to still another aspect of the embodiments of the present invention, there is provided a storage medium in which a computer-readable program is stored, wherein the computer-readable program enables a computer to carry out the method for analyzing a cause of link failure as described above in an apparatus for analyzing a cause of link failure.

According to still another aspect of the embodiments of the present invention, there is provided a computer-readable program, wherein when the program is executed in an apparatus of network optimization, the program enables a computer to carry out the method of network optimization as described above in the apparatus.

According to still another aspect of the embodiments of the present invention, there is provided a storage medium in which a computer-readable program is stored, wherein the computer-readable program enables a computer to carry out the method of network optimization as described above in an apparatus of network optimization.

The advantage of the embodiments of the present invention resides in that detailed information on link failure is provided to a network side by terminal equipment, thereby making the network side to optimize the network more accurately.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

### Brief Description of the Drawings

The above and other objects, features and advantages of the present invention will be apparent from the following detailed description in conjunction with the drawings, in which:
Figure 1 is a flowchart of a method for analyzing a cause of link failure of Embodiment 1 of the present invention;
Figure 2 is a flowchart of a method for analyzing a cause of link failure of Embodiment 2 of the present invention;
Figure 3 is a flowchart of a method for analyzing a cause of link failure of Embodiment 2 of the present invention;
Figure 4 is a flowchart of a method for analyzing a cause of link failure of Embodiment 5 of the present invention;
Figure 5 is a flowchart of a method of network optimization of Embodiment 6 of the present invention;
Figure 6 is a schematic diagram of the structure of an apparatus for analyzing a cause of link failure of Embodiment 7 of the present invention;
Figure 7 is a schematic diagram of the structure of an apparatus for analyzing a cause of link failure of Embodiment 8 of the present invention;
Figure 8 is a schematic diagram of the structure of an apparatus of network optimization of Embodiment 9 of the present invention;
Figure 9 is a flowchart of a method for analyzing a cause of link failure of Embodiment 10 of the present invention;
Figure 10 is a flowchart of a method for analyzing a cause of link failure of Embodiment 11 of the present invention;
Figure 11 is a flowchart of a method of network optimization of Embodiment 12 of the present invention;
Figure 12 is a schematic diagram of the structure of an apparatus for analyzing a cause of link failure of Embodiment 13 of the present invention;
Figure 13 is a schematic diagram of the structure of an apparatus for analyzing a cause of link failure of Embodiment 14 of the present invention; and
Figure 14 is a schematic diagram of the structure of an apparatus of network optimization of Embodiment 15 of the present invention.

### Detailed Description of the Invention

Various embodiments of the present invention shall be described below with reference to the accompanying drawings. These embodiments are illustrative only and are not intended to limit the present invention. For easy understanding of the principle and embodiments of the present invention by those skilled in the art, the embodiments of the present invention shall be described taking an analysis of cause of link failure of an SON network as an example. However, it should be understood that the present invention is not limited thereto, and is applicable to other systems related to a cause of link failure.

In an actual network system, there are many causes of link failure. However, in the prior art, after link failure occurs in terminal equipment, the terminal equipment will provide relevant information on the local cell and neighboring cells in the link failure, such as measurement information and location information, etc., to a network side. Such information is insufficient to make the network side to accurately determine a root cause of the link failure, and hence cannot accurately perform optimization. Therefore, with the embodiments of the present invention, detailed information, such as detailed triggering information causing the link failure, is provided to a network side, thereby making the network side to optimize the network more accurately.

Furthermore, the terminal equipment may further analyze the detailed triggering information causing the link failure, such as a physical layer problem, a random process failure of a medium access control (MAC) layer, and the number of retransmissions at radio link control (RLC) layer reaching a maximum value, etc., so as to obtain a more detailed cause of the link failure. However, in the prior art, the terminal equipment does not differentiate causes of link failure, and cannot provide information on detailed causes of link failure to the network side, thereby resulting in that the network side cannot employ more pertinent measures to optimize the network. With the embodiments of the present invention, the network side may be made to obtain detailed information on link failure, and hence to obtain more accurate optimized network performance.

The method for analyzing a cause of link failure of an embodiment of the present invention shall be described below in detail.

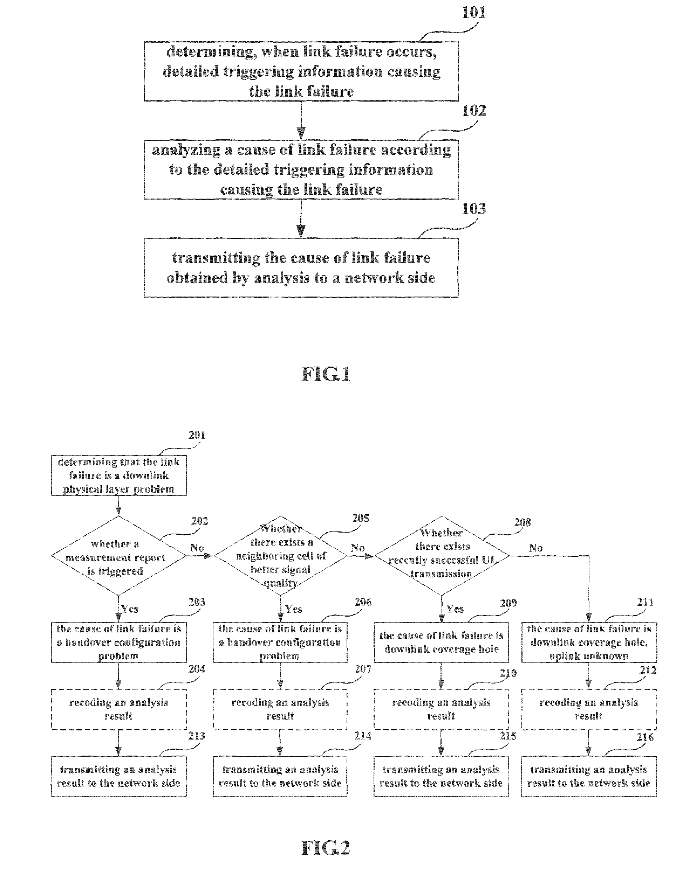

Fig. 1 is a flowchart of a method for analyzing a cause of link failure of Embodiment 1 of the present invention. As shown in Fig. 1, the method includes:
step 101: determining, when link failure occurs, detailed triggering information causing the link failure;
in this embodiment, there are much detailed triggering information causing the link failure, such as a physical layer problem, a random access problem of a medium access control layer, and an uplink radio link control layer transmission problem, etc.;
for example, when UE receives no enough indication (such as N311, see 3GPP TS36.331) on link becoming better (such as in-sync indication, see 3GPP TS36.331) within a certain period of time (such as T310, see 3GPP TS36.331), the UE may determine that the detailed triggering information of the link failure is a physical layer problem;
or when the UE receives indication on failure of a random access procedure of an MAC layer, it may determine that the detailed triggering information of the link failure is a random access problem of an MAC layer;
or when the number of retransmissions at a RLC layer reaches a maximum value, the UE may determine that the detailed triggering information of the link failure is an RLC layer transmission problem;
step 102: analyzing a cause of link failure according to the detailed triggering information causing the link failure;
in this embodiment, the UE may analyzes detailed causes of link failure for different pieces of triggering information, such as a handover configuration problem, a coverage hole, and a random access problem of an MAC layer;
step 103: transmitting the cause of link failure obtained by analysis to a network side.
in this embodiment, the UE may transmit a detailed cause in detailed configuration information obtained by analysis to the network side, so that the network side determines a root cause of the link failure according to the cause or according to the cause in combination with a measurement result, so as to take corresponding measures to optimize the network more accurately;
wherein, the cause of link failure in the detailed configuration information may be included in link failure information for transmission to the network side; however, it is not limited thereto, and other messages may be employed for transmitting the information.

The method for analyzing a cause of link failure in the detailed triggering information causing the link failure shall be described below in detail with reference to the accompanying drawings.

Fig. 2 is a flowchart of a method for analyzing a cause of link failure of Embodiment 2 of the present invention. This embodiment is described taking a physical layer problem as an example. As shown Fig. 2, the method includes:
step 201: determining by UE that the link failure is a downlink physical layer problem;
in this embodiment, whether a timer T310 expires may be judged, and the link failure may be determined as a downlink physical layer problem if the timer expires;
step 202: determining whether a measurement report is triggered, and executing step 203 when the measurement report is triggered, otherwise, executing step 205;
in this embodiment, any manner in the prior art may be employed to determine whether to trigger the measurement report, such as determining by judging whether an event triggering the measurement report occurs; for example, the measurement report will be triggered when a signal intensity/quality of a neighboring cell is greater than that of a serving cell by a threshold value;
step 203: determining by the UE that the cause of link failure is a handover configuration problem when the measurement report is triggered in step 202;
in this case, the handover configuration problem may be due to that a handover parameter (such as a cell individual offset, see 3GPP TS36.331) of the UE for a target cell is set too small, which results in that the UE does not finish handover when a signal of the serving cell received by the UE is very weak;
step 204: recoding an analysis result by the UE;
in this embodiment, the UE may record the analysis result "handover configuration problem" in such a case in a link failure report and transmit the analysis result to the network side via the link failure report; however, it is not limited thereto, and the analysis result may also be recorded separately and transmitted to the network side, for use by the network side in analyzing a cause of link failure or optimizing the network;
wherein, in case of the downlink physical layer problem, the analysis result "handover configuration problem" may be recorded in a manner as follows: "handover configuration problem(a physical layer problem, measurement report triggered)"; or "handover configuration problem (T310 expires, measurement report triggered) ", etc.;
wherein, "measurement report triggered" may be optional information, and may not be recorded;
step 205: determining further by the UE whether there exists a neighboring cell of better signal quality when it is determined in step 202 that the measurement report is not triggered, and executing step 206 when a judgment result is yes, otherwise, executing step 208;
step 206: determining by the UE that the cause of link failure is a handover configuration problem when a judgment result in step 205 is yes;
in this case, the handover configuration problem may be due to that a handover parameter (such as a cell individual offset, see 3GPP TS36.331) of the UE for a target cell is set too small, which results in that the UE does not finish handover when a signal of the serving cell received by the UE is very weak;
step 207: recoding an analysis result by the UE;
in this embodiment, the UE may record the analysis result "handover configuration problem" in such a case in a link failure report and transmit the analysis result to the network side via the link failure report; however, it is not limited thereto, and the analysis result may also be recorded separately and transmitted to the network side, for use by the network side in analyzing a cause of link failure or optimizing the network;
wherein, in case of the downlink physical layer problem, the analysis result "handover configuration problem" may be recorded in a manner as follows: "handover configuration problem (a physical layer problem, measurement report is not triggered, there exists a neighboring cell of better signal quality) "; or "handover configuration problem (T310 expires, measurement report is not triggered, there exists a neighboring cell of better signal quality) ", etc.;
wherein, "measurement report is not triggered, there exists a neighboring cell of better signal quality" may be optional information, and may not be recorded;
step 208: determining further by the UE whether there exists recently successful UL transmission before the link failure occurs when the judgment result in step 205 is no, and executing step 209 when there exists recently successful UL transmission, otherwise, executing step 211;
in this embodiment, the recently successful UL transmission refers to occurred successful UL transmission before a downlink problem occurs (such as N310 pieces of continuous out-of-sync indication from a lower layer are received);
step 209: determining that the cause of link failure is "coverage hole" when a determination result in step 208 is that there exists recently successful UL transmission;
in this embodiment, the coverage hole refers to that the UE cannot transmit data packets in an uplink direction successfully, and/or cannot receive data packets in a downlink direction;
in this case, the coverage hole is only a downlink coverage hole, referring to that the UE cannot receive data packets in a downlink direction;
step 210: recoding an analysis result by the UE;
in this embodiment, the UE may record the analysis result "coverage hole" in such a case in a link failure report and transmit the analysis result to the network side via the link failure report; however, it is not limited thereto, and the analysis result may also be recorded separately and transmitted to the network side, for use by the network side in analyzing a cause of link failure or optimizing the network;
wherein, in case of the physical layer problem, the analysis result "coverage hole" may be recorded in a manner as follows: "coverage hole (a physical layer problem, measurement report is not triggered, there exists no neighboring cell of better signal quality, there exists recently successful UL transmission) "; or "coverage hole (T310 expires, measurement report is not triggered, there exists no neighboring cell of better signal quality, there exists recently successful UL transmission) ", etc.;
wherein, "there exists no neighboring cell of better signal quality, there exists recently successful UL transmission" may be optional information, and may not be recorded;
step 211: determining that the cause of link failure is "coverage hole" when the determination result in step 208 is that there exists no recently successful UL transmission;
in this embodiment, it may be determined as "downlink coverage hole, uplink unknown";
step 212: recoding an analysis result;
in this embodiment, the UE may record the analysis result "coverage hole" in such a case in a link failure report and transmit the analysis result to the network side via the link failure report; however, it is not limited thereto, and the analysis result may also be recorded separately and transmitted to the network side, for use by the network side in analyzing a cause of link failure or optimizing a network;
wherein, in case of the physical layer problem, the analysis result "coverage hole" may be recorded in a manner as follows: "coverage hole (a physical layer problem, measurement report not triggered, there exists no neighboring cell of better signal quality, there exists no recently successful UL transmission) "; or "coverage hole (T310 expires, measurement report is not triggered, there exists no neighboring cell of better signal quality, there exists no recently successful UL transmission) ", etc.;
wherein, "measurement report is not triggered, there exists no neighboring cell of better signal quality, there exists no recently successful UL transmission" may be optional information, and may not be recorded;
steps 213, 214 and 215: transmitting an analysis result by the UE to the network side;
in this embodiment, the analysis result may be included in the link failure report for transmitting to the network side, and may also be separately transmitted; furthermore, the analysis result may be transmitted only upon request by the network side.

In the above embodiment, it should be noted that steps 204, 207, 210 and 212 are optional; furthermore, the process shown in Fig. 2 is just an embodiment of the present invention, and to those skilled in the art, each step may be set according to an actual situation, only if the following is satisfied: when a measurement report is triggered, it is determined that the cause of link failure is a handover configuration problem; when a measurement report is not triggered and there exists a neighboring cell of better signal quality, it is determined that the cause of link failure is a handover configuration problem; when a measurement report is not triggered, there exists no neighboring cell of better signal quality and there exists recently successful UL transmission before the link failure, it is determined that the cause of link failure is only downlink coverage hole; and when a measurement report is not triggered, there exists no neighboring cell of better signal quality and there exists no recently successful UL transmission before the link failure, it is determined that the cause of link failure is downlink coverage hole, and uplink is unknown.

It can be seen from the above embodiment that in the case that the link failure is a physical layer problem, the UE may analyze detailed causes of link failure according to the above processes, and report an analysis result to the network side. In this way, the network side may analyze causes of link failure according to the information reported by the UE, so as to perform network optimization more accurately.

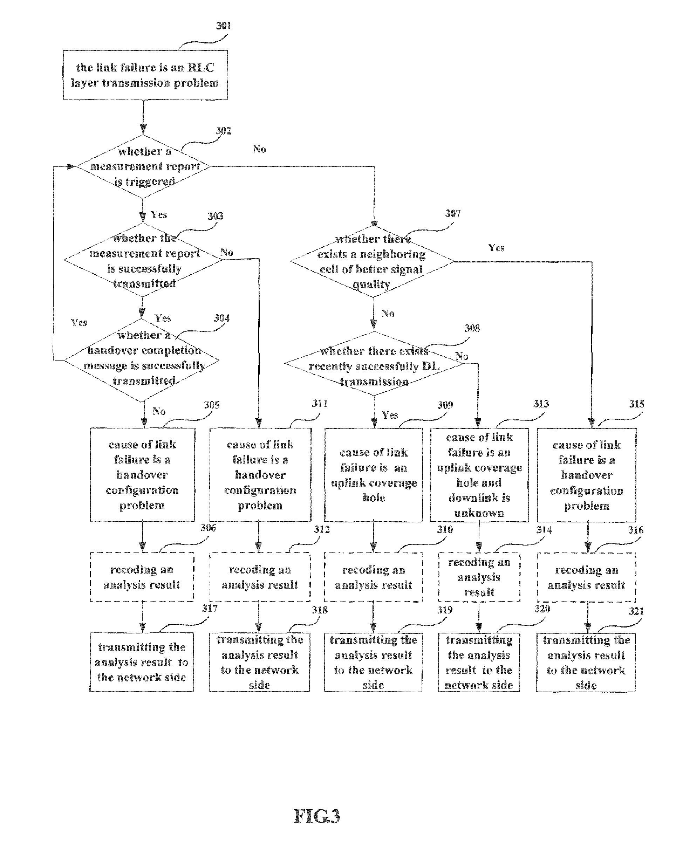

Fig. 3 is a flowchart of a method for analyzing a cause of link failure of Embodiment 3 of the present invention. This embodiment is described taking an uplink RLC layer transmission problem as an example. As shown Fig. 3, the method includes:
step 301: determining by the UE that the link failure is an RLC layer transmission problem;
in this embodiment, when the UE transmits data to a base station, when the base station does not correctly receive the data, the base station will notify the UE to retransmit the data, and the UE judges whether a maximum number of times of retransmission of an RLC layer is reached, when the maximum number of times is reached, it may be determined that the link failure is an uplink RLC layer transmission problem;
step 302: determining whether a measurement report is triggered, and executing step 303 when the measurement report is triggered, otherwise, executing step 307;
in this embodiment, a manner of determining whether a measurement report is triggered is as described in Embodiment 2, which shall not be described herein any further;
step 303: determining further by the UE whether the measurement report is successfully transmitted when it is determined in step 302 that the measurement report is triggered, and executing step 304 when it is successfully transmitted, otherwise, executing step 311;
in this embodiment, the UE receives an acknowledgement message fed back from the network side after transmitting the measurement report, and may determine that the measurement report is successfully transmitted;
step 304: determining further whether a handover completion message is successfully transmitted when it is determined in step 303 that that the measurement report is successfully transmitted, and executing step 305 when the handover completion message is not successfully transmitted, otherwise, turning back to step 302;
in this embodiment, the handover completion message is the last message in a completed handover process, which is transmitted from the UE to a target base station, such as an RRC connection reconfiguration completion message;
step 305: determining that the cause of link failure is a handover configuration problem when it is determined in step 304 that the handover completion message is not successfully transmitted;
in this embodiment, a handover configuration problem may be determined as the handover completion message cannot be transmitted;
in particular, it may be a handover parameter problem due to that a handover parameter (such as a cell individual offset, see 3GPP TS36.331) of the UE for a target cell is set too large, which results in that the UE does not finish handover or link failure occurs after handover is finished when a signal of the target cell is very weak as the UE is handed over to the target cell;
step 306: recoding an analysis result by the UE;
in this embodiment, the UE may record the analysis result "handover configuration problem" in such a case in a link failure report and transmit the analysis result to the network side via the link failure report; however, it is not limited thereto, and the analysis result may also be recorded separately and transmitted to the network side, for use by the network side in analyzing a cause of link failure or optimizing the network;
wherein, in case of the uplink RLC layer transmission problem, the analysis result "handover configuration problem" may be recorded in a manner as follows: "handover configuration problem (an uplink RLC layer transmission problem, handover completion message cannot be transmitted) ";
wherein, "handover completion message cannot be transmitted" may be optional information, and may not be recorded;
step 307: determining further by the UE whether there exists a neighboring cell of better signal quality when it is determined in step 302 that the measurement report is not triggered, and executing step 315 when a determination result is yes, otherwise, executing step 308;
step 308: determining further by the UE whether there exists recently successfully DL transmission when the determination result is no in step 307, and executing step 309 when a judgment result is yes, otherwise, executing step 313;
wherein, the recently successfully downlink transmission refers to occurred successful downlink transmission before determining the cause of link failure is the RLC layer transmission problem;
step 309: determining by the UE the cause of link failure is only an uplink coverage hole when the judgment result in step 308 is yes;
step 310: recoding an analysis result by the UE;
in this embodiment, the UE may record the analysis result "coverage hole" in such a case in a link failure report and transmit the analysis result to the network side via the link failure report; however, it is not limited thereto, and the analysis result may also be recorded separately and transmitted to the network side, for use by the network side in analyzing a cause of link failure or optimizing the network;
wherein, in case of the uplink RLC layer transmission problem, the analysis result "coverage hole" may be recorded in a manner as follows: "coverage hole" (an uplink RLC layer transmission problem, measurement report not triggered, there exists no neighboring cell of better signal quality, there exists recently successful DL transmission);
wherein, measurement report is not triggered, there exists no neighboring cell of better signal quality, there exists recently successful DL transmission" may be optional information, and may not be recorded;
step 311: determining by the UE that the cause of link failure is handover configuration problem when the judgment result in step 303 is no;
in this embodiment, it may be a handover parameter problem due to that a handover parameter (such as a cell individual offset, see 3GPP TS36.331) of the UE for a target cell is set too small, which results in that the UE does not finish handover when a signal of the serving cell received by the UE is very weak;
step 312: recoding an analysis result by the UE;
in this embodiment, the UE may record the analysis result "handover configuration problem" in such a case in a link failure report and transmit the analysis result to the network side via the link failure report; however, it is not limited thereto, and the analysis result may also be recorded separately and transmitted to the network side, for use by the network side in analyzing a cause of link failure or optimizing the network;
wherein, in case of the uplink RLC layer transmission problem, the analysis result "handover configuration problem" may be recorded in a manner as follows: "handover configuration problem (an uplink RLC transmission problem, measurement report is triggered, measurement report is not transmitted successfully) ";
wherein, "measurement report is triggered, measurement report is not transmitted successfully" may be optional information, and may not be recorded;
step 313: determining by the UE that the cause of link failure is an uplink coverage hole and downlink is unknown when the judgment result in step 308 is no;
step 314: recoding an analysis result by the UE;
in this embodiment, the UE may record the analysis result "coverage hole" in such a case in a link failure report and transmit the analysis result to the network side via the link failure report; however, it is not limited thereto, and the analysis result may also be recorded separately and transmitted to the network side, for use by the network side in analyzing a cause of link failure or optimizing the network;
wherein, in case of the uplink RLC layer transmission problem, the analysis result "coverage hole" may be recorded in a manner as follows: "coverage hole (an uplink RLC transmission problem, measurement report is not triggered, there exists no neighboring cell of better signal quality, there exists no recently successful downlink transmission)";
wherein, "measurement report is not triggered, there exists no neighboring cell of better signal quality, there exists no recently successful downlink transmission" may be optional information, and may not be recorded;
step 315: determining by the UE that the cause of link failure is handover configuration problem when the judgment result in step 307 is yes;
wherein, in particular, the handover configuration problem may be a handover parameter problem due to that a handover parameter (such as a cell individual offset, see 3GPP TS36.331) of the UE for a target cell is set too small, which results in that the UE does not finish handover when a signal of the serving cell received by the UE is very weak;
step 316: recoding an analysis result by the UE;
in this embodiment, the UE may record the analysis result "handover configuration problem" in such a case in a link failure report and transmit the analysis result to the network side via the link failure report; however, it is not limited thereto, and the analysis result may also be recorded separately and transmitted to the network side, for use by the network side in analyzing a cause of link failure or optimizing the network;
wherein, in case of the uplink RLC layer transmission problem, the analysis result "handover configuration problem" may be recorded in a manner as follows: "handover configuration problem (an uplink RLC transmission problem, measurement report is not triggered, there exists a neighboring cell of better signal quality)";
wherein, "measurement report is not triggered, there exists a neighboring cell of better signal quality" may be optional information, and may not be recorded;
steps 317-321: transmitting the analysis result by the UE to the network side;
in this embodiment, the analysis result may be included in the link failure report and transmit the analysis result to the network side via the link failure report, and may also be separately transmitted; furthermore, the analysis result may be transmitted upon request by the network side, and may also be transmitted immediately after it is obtained; in a particular embodiment, it may be determined according to an actual situation.

In the above embodiment, it should be noted that steps 306, 310, 312, 314 and 316 are optional; furthermore, the process shown in Fig. 3 is just an embodiment of the present invention, and to those skilled in the art, each step may be set according to an actual situation, only if the following is satisfied: when a measurement report is triggered and the measurement report is not transmitted successfully, it is determined that the cause of link failure is a handover configuration problem; when a measurement report is triggered and the measurement report is successfully transmitted, and a handover completion message is not transmitted successfully, it is determined that the cause of link failure is a handover configuration problem; when a measurement report is not triggered and there exists a neighboring cell of better signal quality, it is determined that the cause of link failure is a handover configuration problem; when a measurement report is not triggered, there exists no neighboring cell of better signal quality and there exists recently successful downlink transmission before the link failure, it is determined that the cause of link failure is only uplink coverage hole; and when a measurement report is not triggered, there exists no neighboring cell of better signal quality and there exists no recently successful DL transmission before the link failure, it is determined that the cause of link failure is uplink coverage hole, and downlink is unknown.

It can be seen from the above embodiment that in the case that the cause of link failure is an uplink RLC transmission problem, the UE may analyze detailed causes of link failure according to the above processes, and report an analysis result to the network side. In this way, the network side may analyze causes of link failure according to the information reported by the UE, so as to perform network optimization more accurately.

Embodiment 4 of the present invention further provides a method for analyzing a cause of link failure.

In an embodiment of the present invention, when the cause of link failure is a random access problem of an MAC layer, the UE determines that the cause of the link failure is an uplink problem related to a random access process of the MAC layer in receiving indication on random process failure of the MAC layer, such as incorrect setting of transmission power, and improper resource configuration of a physical random access channel (PRACH), etc..

Furthermore, the UE may record the analysis result "random access problem of an MAC layer". Wherein, the UE may record the analysis result in such a case in a link failure report and transmit the analysis result to the network side via the link failure report; however, it is not limited thereto, and the analysis result may also be recorded separately and transmitted to the network side, for use by the network side in analyzing a cause of link failure or optimizing the network.

It can be seen from the above embodiment that the UE may obtain information on detailed causes of link failure by analyzing the causes of link failure, and report an analysis result to the network side. In this way, the network side may analyze causes of link failure according to the information reported by the UE, so as to perform network optimization more accurately.

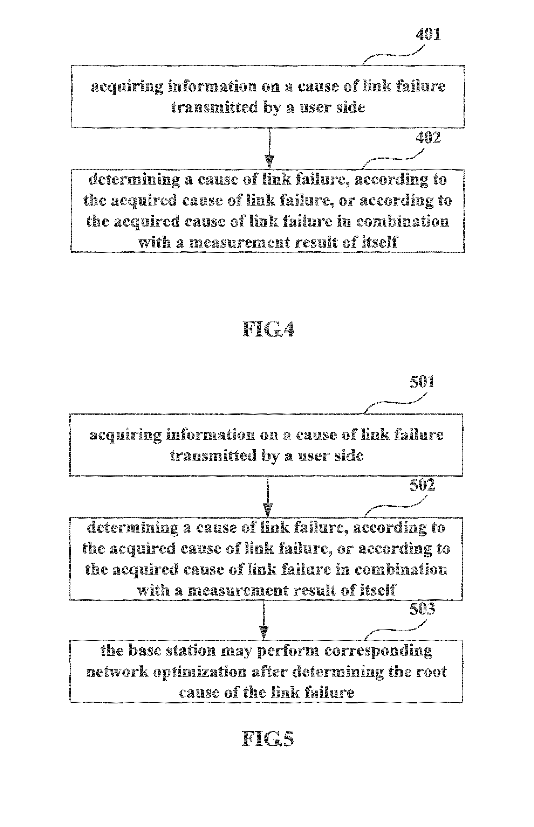

Fig. 4 is a flowchart of a method for analyzing a cause of link failure of Embodiment 5 of the present invention. For the base station where the UE is located when link failure occurs in the UE, as shown in Fig. 4, the method includes:
step 401: acquiring information on a cause of link failure transmitted by a user side;
in this embodiment, the information on a cause of link failure may be that described in embodiments 1-4 above;
for example, a handover configuration problem (an uplink RLC transmission problem, a handover completion message cannot be transmitted);
a handover configuration problem (an uplink RLC transmission problem, a measurement report is triggered, the measurement report is not transmitted successfully);
a handover configuration problem (an uplink RLC transmission problem, a measurement report is not triggered, there exists a neighboring cell of better signal equality);
coverage hole (an uplink RLC transmission problem, a measurement report is not triggered, there exists no neighboring cell of better signal quality, there exists recently successful downlink transmission);
coverage hole (an uplink RLC transmission problem, a measurement report is not triggered, there exists no neighboring cell of better signal quality, there exists no recently successful downlink transmission);
a handover configuration problem (T310 expires, a measurement report is triggered);
a handover configuration problem (T310 expires, a measurement report is not triggered, there exists a neighboring cell of better signal quality);
coverage hole (T310 expires, a measurement report is not triggered, there exists no neighboring cell of better signal quality, there exists recently successful uplink transmission);
coverage hole (T310 expires, a measurement report is not triggered, there exists no neighboring cell of better signal quality, there exists no recently successful uplink transmission); and
a random access problem of an MAC layer;
in the above information, some are optional, which are as described in embodiments 1-4, and shall not be described herein any further;
furthermore, the base station where the UE is located does not obtain the above information directly, and the information may be transmitted to the base station by another base station via an air-interface message or an inter-base station message, thereby enabling the base station to obtain a cause of link failure;
in this embodiment, the information on a cause of link failure may be transmitted via a link failure report; furthermore, it may also be transmitted separately, or included in another message for transmission;
step 402: determining a cause of link failure, according to the acquired cause of link failure, or according to the acquired cause of link failure in combination with a measurement result of itself;
in this embodiment, after obtaining the cause of link failure, the base station may use the obtained cause of link failure to determine a root cause of the link failure;
furthermore, in this embodiment, in order to determine a root cause of the link failure more accurately, the base station may determine the root cause of the link failure according to the obtained cause of link failure, and determine the root cause of the link failure more accurately in combination with the measurement result of itself;
in this embodiment, the measurement of itself may be SRS measurement, etc.

Fig. 5 is a flowchart of a method of network optimization of Embodiment 6 of the present invention. For the base station where the UE is located when link failure occurs in the UE, as shown in Fig. 5, the method includes:
steps 501 and 502: similar to steps 401 and 402 in Embodiment 5 shown in Fig. 4, which shall not be described herein any further;
step 503: in step 502, the base station may perform corresponding network optimization after determining the root cause of the link failure.

Determination of the root cause of the link failure and network optimization by the base station in combination with the measurement result of itself shall be described below by way of examples.

### Example 1: a handover configuration problem

The UE reports following causes of link failure, for example, a handover configuration problem (T310 expires, a measurement report is triggered), (T310 expires, a measurement report is not triggered), (an uplink RLC transmission problem, a handover completion message cannot be transmitted), (an uplink RLC transmission problem, a measurement report cannot be transmitted successfully), etc.;
the measurement result of the base station itself: the base station may judge whether handover is too early, handover is too late, or being handed over to a wrong cell, according to information of the UE during the handover;
in this way, after obtaining a cause of link failure reported by the UE, the base station compares the cause with a judgment result of itself, such as handover is too early, handover is too late, or being handed over to a wrong cell, so as to determine a root cause of the link failure, thereby deciding a parameter to be adjusted, and achieving an object of network optimization.

For example, although the base station is able to determine that a cause of link failure is that handover is too late, if a cause reported by the UE to the base station is "a handover configuration problem (T310 expires, a measurement report is triggered)", the base station may determine according to the above information which parameters should be adjusted, for example, a parameter having measurement configuration, such as time to trigger (see TS36.331), so as to optimize the network by adjusting a corresponding parameter.

### Example 2: coverage hole

Similar to the above analysis, the UE reports following causes of link failure: coverage hole (T310 expires, a measurement report is not triggered, there exists recently successful UL transmission), coverage hole (T310 expires, a measurement report is not triggered, there exists no recently successful UL transmission);
if the base station is able to determine that a cause of link failure is coverage hole, when the base station obtains a cause of link failure from the UE, the base station may determine whether the coverage hole is uplink coverage hole, downlink coverage hole, or uplink and downlink coverage holes, according to a measurement result of itself and an analysis result reported by the UE.

A detailed process is as follows:
the base station acquires the cause of link failure, such as uplink, downlink, or uplink and downlink coverage holes, reported by the UE, initializes those MDT report procedures of the UE near the position where the link failure occurs, and further determines a problem of coverage hole according to the MDT report; in this way, the base station notifies an OAM server of a determined result for optimizing performance of the network.

### Example 3: a random access problem of an MAC layer

when a cause of link failure reported by the UE is a random access problem of an MAC layer, the base station is able to initialize those random access channel (RACH) report procedures of the UE near the position where the link failure occurs after acquiring the information, thereby assisting in finding a cause of a random access problem; in this way, the RACH may be optimized according to a particular cause, so as to optimize the network.

It can be seen from the above embodiment that the UE analyzes causes of link failure according to detailed triggering information, and provides an analysis result to the network side, so that the base station determines a root cause of the link failure according to the analysis result, or further in combination of a measurement result of itself after obtaining the analysis result, so as to optimize the network more accurately.

A person of ordinary skill in the art may understand that all or part of the steps in the method carrying out the above embodiment may be carried out by related hardware instructed by a program. The program may be stored in a computer-readable storage medium. And when being executed, the program may include all or part of the steps in the method in the above embodiment, and the storage medium may include an ROM, an RAM, a floppy disc, and a compact disc, etc.

Embodiments of the present invention further provide an apparatus for analyzing a cause of link failure and an apparatus of network optimization, as described in the embodiments below. As the principles of the apparatuses for solving problems are similar to those of the above method for analyzing a cause of link failure and the method of network optimization based on these apparatuses, the implementation of the methods may be referred to for the implementation of the apparatuses, and the repeated parts shall not be described any further.

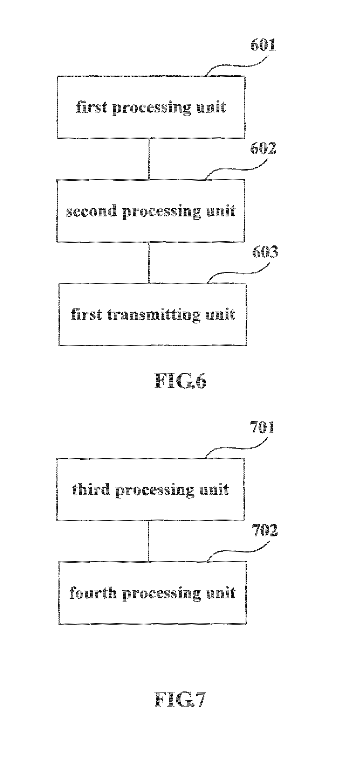

Fig. 6 is a schematic diagram of an apparatus for analyzing a cause of link failure of Embodiment 7 of the present invention. The apparatus includes: a first processing unit 601, a second processing unit 602 and a first transmitting unit 603; wherein,
the first processing unit 601 is configured to determine, when link failure occurs, detailed triggering information causing the link failure; in this embodiment, a manner of processing of the first processing unit 601 is as described in step 101 in Embodiment 1, which shall not be described herein any further;
the second processing unit 602 is configured to analyze a cause of link failure according to the detailed triggering information causing the link failure; wherein, a manner of processing of the second processing unit 602 is as described in step 102 in Embodiment 1 and in embodiments 2-4, which shall not be described herein any further;
the first transmitting unit 103 is configured to transmit the cause of link failure obtained by analysis to a network side; in this embodiment, the transmission of the cause of link failure by the first transmitting unit 103 is as described in step 103 in Embodiment 1, which shall not be described herein any further.

In this embodiment, a function of the second processing unit 602 shall be described with respect to a detailed cause of link failure.

In this embodiment, when the detailed cause of link failure is a physical layer problem, the second processing unit 602 is configured to:
determine, when a measurement report has been triggered, that the cause of link failure is a handover configuration problem;
determine, when a measurement report has not been triggered and there exists a neighboring cell of good signal quality, that the cause of link failure is a handover configuration problem;
determine, when a measurement report has not been triggered, there exists no neighboring cell of good signal quality and there exists recently successful UL transmission before the link failure occurs, that the cause of link failure is a downlink coverage hole; and
determine, when a measurement report has not been triggered, there exists no neighboring cell of good signal quality and there exists no recently successful UL transmission before the link failure occurs, that the cause of link failure is a downlink coverage hole, and uplink is unknown.

In this case, a manner of processing of the second processing unit 602 is as described in Embodiment 2, which shall not be described herein any further.

In this embodiment, when the detailed cause of the link failure is a radio link control layer transmission problem, the second processing unit 602 is configured to:
determine, when a measurement report is triggered and is not transmitted successfully, that the cause of link failure is a handover configuration problem;
determine, when a measurement report is triggered and is transmitted successfully and a handover completion message is not transmitted successfully, that the cause of link failure is a handover configuration problem;
determine, when a measurement report has not been triggered and there exists a neighboring cell of good signal quality, that the cause of link failure is a handover configuration problem;
determine, when a measurement report has not been triggered, there exists no neighboring cell of good signal quality and there exists recently successful downlink transmission before the link failure occurs, that the cause of link failure is an uplink coverage hole; and
determine, when a measurement report has not been triggered, there exists no neighboring cell of good signal quality and there exists no recently successful downlink transmission before the link failure occurs, that the cause of link failure is an uplink coverage hole and the downlink is unknown.

In this case, a manner of processing of the second processing unit 602 is as described in Embodiment 3, which shall not be described herein any further.

In this embodiment, when the detailed cause of the link failure is a random access problem of a medium access control layer, the second processing unit 602 is configured to:
determine, after indication of failure of a random procedure of a medium access control layer is received, that the cause of link failure is an uplink problem associated with the random procedure of a medium access control layer.

In this case, a manner of processing of the second processing unit 602 is as described in Embodiment 4, which shall not be described herein any further.

In this embodiment, the apparatus may be UE, such as terminal equipment, for example, a PDA, a mobile terminal, and a computer, etc.

Fig. 7 is a schematic diagram of an apparatus for analyzing a cause of link failure of Embodiment 8 of the present invention. The apparatus includes: a third processing unit 701 and a fourth processing unit 702; wherein,
the third processing unit 701 is configured to acquire information on a cause of link failure transmitted by a user side;
in this embodiment, information on the cause of link failure is as described in step 401 in Embodiment 5, which shall not be described herein any further;
the fourth processing unit 702 is configured to determine a cause of link failure according to the acquired cause of link failure, or according to the acquired cause of link failure in combination with a measurement result;
in this embodiment, the information on the cause of link failure is as described in step 402 in Embodiment 5, which shall not be described herein any further.

In the above embodiment, the apparatus may be a base station where the UE is located when the link failure occurs in the UE.

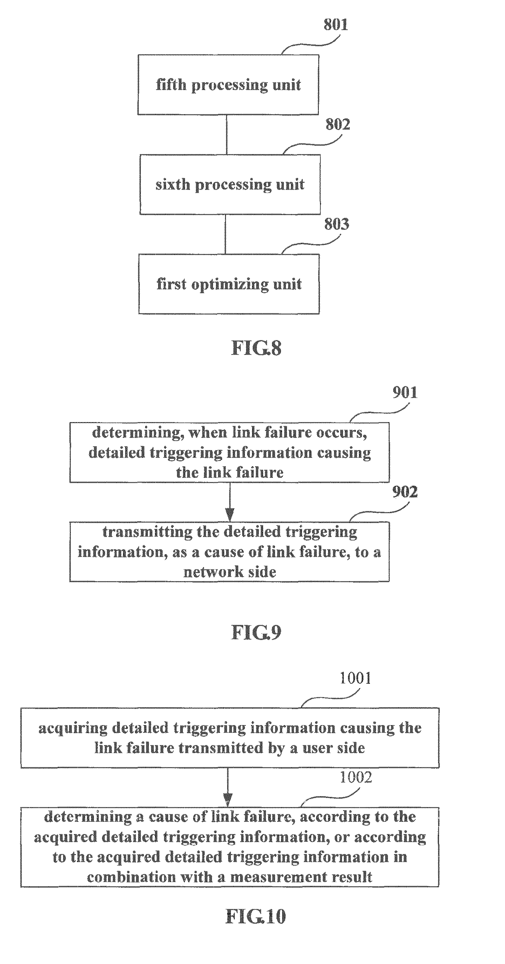

Fig. 8 is a schematic diagram of an apparatus of network optimization of Embodiment 9 of the present invention. The apparatus includes: a fifth processing unit 801, a sixth processing unit 802 and a first optimizing unit 803; wherein,
the fifth processing unit 801 is configured to acquire a cause of link failure transmitted by a user side;
the sixth processing unit 802 is configured to determine a cause of link failure according to the acquired cause of link failure, or according to the acquired cause of link failure in combination with a measurement result; and
the first optimizing unit 803 is configured to optimize a network according to the determined cause of link failure.

In this embodiment, execution processes of the fifth processing unit 801 and the sixth processing unit 802 are as described in steps 401 and 402 in Embodiment 5, and an execution process of the first optimizing unit 803 is as described in step 503 in Embodiment 6, which shall not be described herein any further.

In the above embodiment, the apparatus may be a base station where the UE is located when the link failure occurs in the UE.

It can be seen from the above embodiment that the UE may obtain detailed information on a cause of link failure by analyzing causes of link failure, and reports an analysis result to the network side. In this way, the network side may analyze the causes of link failure according to the information reported by the UE, so as to optimize the network more accurately.

Fig. 9 is a flowchart of a method for analyzing a cause of link failure of Embodiment 10 of the present invention. For UE, as shown in Fig. 9, the method includes:
step 901: determining, when link failure occurs, detailed triggering information causing the link failure; and
step 902: transmitting the detailed triggering information, as the cause of link failure, to a network side.

In the above embodiment, the detailed triggering information is as described in Embodiment 1, which shall not be described herein any further.

It can be seen from the above embodiment that when link failure occurs, UE provides the detailed triggering information causing the link failure to the network side, so that the network side determines a cause of the link failure more accurately according to the information, so as to optimize the network more accurately.

Fig. 10 is a flowchart of a method for analyzing a cause of link failure of Embodiment 11 of the present invention. For the base station where the UE is located when link failure occurs in the UE, as shown in Fig. 10, the method includes:
step 1001: acquiring detailed triggering information causing the link failure transmitted by a user side;
wherein, the UE transmits the detailed triggering information to the network side as a cause of link failure, and the base station where the UE is located does not obtain the above information directly, and the information may be transmitted to the base station where the UE is located by another base station via an air-interface message or an inter-base station message, thereby enabling the base station to obtain the cause of link failure;
in this embodiment, the information on a cause of link failure may be transmitted via a link failure report; furthermore, it may also be transmitted separately, or included in another message for transmission;
step 1002: determining the cause of link failure, according to the acquired detailed triggering information, or according to the acquired detailed triggering information in combination with a measurement result.

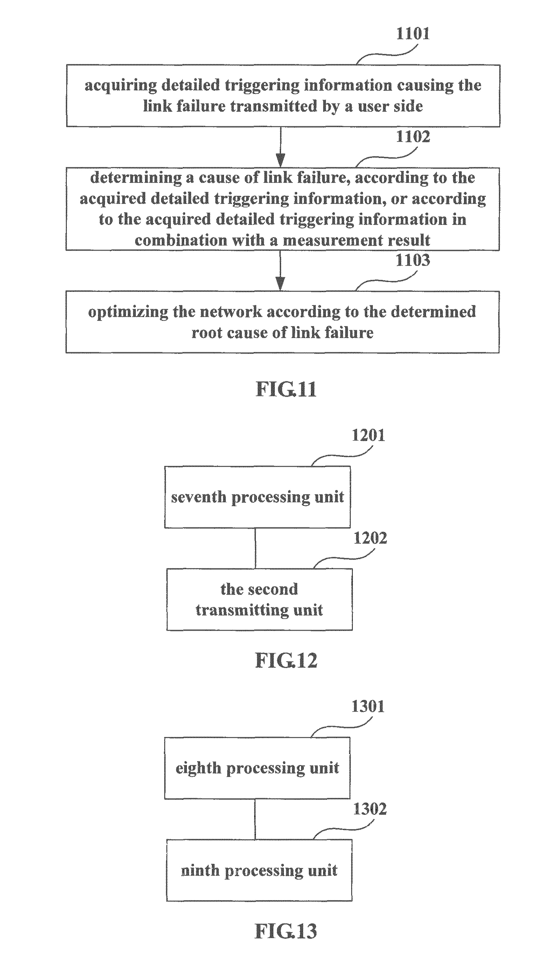

Fig. 11 is a flowchart of a method of network optimization of Embodiment 12 of the present invention. For the base station where the UE is located when link failure occurs, as shown in Fig. 11, the method includes:
steps 1101 and 1102 are similar to step 1001 and 1002 in Embodiment 11, which shall not be described herein any further;
step 1103: optimizing the network according to the determined root cause of link failure.

It can be seen from the above embodiment that when link failure occurs, the UE provides the detailed triggering information causing the link failure to the network side, so that the network side determines a cause of the link failure more accurately according to the information, so as to optimize the network more accurately.

The method for analyzing a cause of link failure and method of network optimization of the embodiments of the present invention shall be described below by way of examples.

### Example 1: a physical layer problem

the base station may determine that a cause of link failure is a handover configuration problem,(such as handover is too early, handover is too late, or being handed over to a wrong cell) or a coverage hole according to the detailed triggering information and a measurement result;
the manner of judgment may be achieved by using the prior art; for example, when the measurement result shows that there exists no neighboring cell of better signal quality when the link failure occurs, it may be judged that it is a coverage hole;
according to the judgment result, the base station may solve the handover configuration problem by adjusting a handover parameter (such as a cell individual offset, see 3GPP TS36.331) of the UE for a target cell, or solve the problem of coverage hole by increasing the coverage of the base station.

### Example 2: a random access problem of a medium access control layer

the base station may determine that the cause of the link failure is an uplink problem related to a random access process of the MAC layer according to the detailed triggering information, such as incorrect setting of transmission power, and improper resource configuration of a physical random access channel (PREACH);
and the base station may optimize the network performance by increasing transmission power or increasing resources of a physical random access channel.

### Example 3: an uplink radio link control layer transmission problem

The base station may judge that the configuration of the uplink is improper according to a reported uplink radio link control layer transmission problem, such as incorrect setting of uplink transmission power;
and the base station may optimize the network performance by adjusting the uplink transmission power of the UE.

It can be seen from above that the above embodiments are just illustrative embodiments of the present invention, and it is conceivable to those skilled in the art to design schemes for determining a root cause of link failure and optimizing a network according to the embodiments of the present invention.

Embodiment of the present invention further provide an apparatus for analyzing a cause of link failure and an apparatus of network optimization, as described in the embodiments below. As the principles of the apparatuses for solving problems are similar to those of the above method for analyzing a cause of link failure and the method of network optimization based on these apparatuses, the implementation of the methods may be referred to for the implementation of the apparatuses, and the repeated parts shall not be described any further.

Fig. 12 is a schematic diagram of the structure of an apparatus for analyzing a cause of link failure of Embodiment 13 of the present invention. The apparatus includes: a seventh processing unit 1201 and a second transmitting unit 1202; wherein,
the seventh processing unit 1201 is configured to determine, when link failure occurs, detailed triggering information causing the link failure; wherein, a detailed process of determination is as described in Embodiment 1 above, which shall not be described herein any further;
and the second transmitting unit 1202 is configured to transmit the detailed triggering information, as a cause of link failure, to a network side; wherein, a detailed process of transmission is as described in Embodiment 1 above, which shall not be described herein any further.

In this embodiment, the apparatus may be UE, such as a PDA, and a mobile terminal, etc.

Fig. 13 is a schematic diagram of the structure of an apparatus for analyzing a cause of link failure of Embodiment 14 of the present invention. The apparatus includes: an eighth processing unit 1301 and a ninth processing unit 1302; wherein,
the eighth processing unit 1301 is configured to acquire detailed triggering information causing the link failure transmitted by a user side; wherein, a detailed manner of acquisition is as described in Embodiment 11 above, which shall not be described herein any further;
and the ninth processing unit 1302 is configured to determine a cause of link failure, according to the acquired detailed triggering information, or according to the acquired detailed triggering information in combination with a measurement result; wherein, a detailed process of determination is as described in Embodiment 11 above, which shall not be described herein any further.

In the above embodiment, the apparatus is a base station, that is, the base station where the UE is located when link failure occurs.

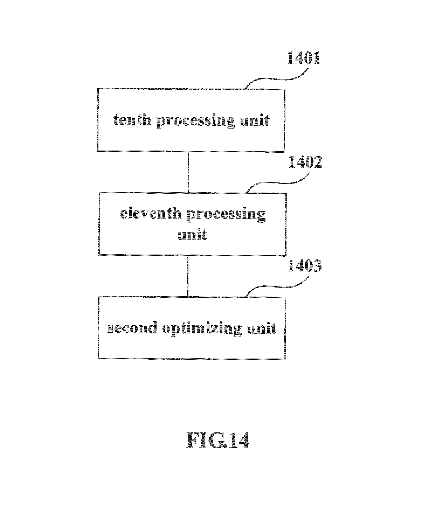

Fig. 14 is a schematic diagram of the structure of an apparatus of network optimization of Embodiment 15 of the present invention. As shown in Fig. 14, the apparatus includes: a tenth processing unit 1401, an eleventh processing unit 1402 and a second optimizing unit 1403; wherein,
the functions of the tenth processing unit 1401 and the eleventh processing unit 1402 are similar to those of the eighth processing unit 1301 and the ninth processing unit 1302 in Embodiment 14, which shall not be described herein any further;
and the second optimizing unit 1403 is configured to optimize a network according to the determined cause of link failure.

In this embodiment, the apparatus may be UE, such as a PDA, and a mobile terminal, etc.

It can be seen from the above embodiment that when link failure occurs, the UE provides the detailed triggering information causing the link failure to the network side, so that the network side determines a cause of the link failure more accurately according to the information, so as to optimize the network more accurately.

An embodiment of the present invention further provides a computer-readable program, wherein when the program is executed in an apparatus for analyzing a cause of link failure, the program enables a computer to carry out the method for analyzing a cause of link failure as described in embodiments 1-5 and 10-11 in the apparatus for analyzing a cause of link failure.

An embodiment of the present invention further provides a storage medium in which a computer-readable program is stored, wherein the computer-readable program enables a computer to carry out the method for analyzing a cause of link failure as described in embodiments 1-5 and 10-11 in an apparatus for analyzing a cause of link failure.

An embodiment of the present invention further provides a computer-readable program, wherein when the program is executed in an apparatus of network optimization, the program enables a computer to carry out the method of network optimization as described in embodiments 6 and 12 in the apparatus of network optimization.

An embodiment of the present invention further provides a storage medium in which a computer-readable program is stored, wherein the computer-readable program enables a computer to carry out the method of network optimization as described in embodiments 6 and 12 in an apparatus of network optimization.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A method for analyzing a cause of link failure, comprising:
determining, when link failure occurs, detailed triggering information causing the link failure;
analyzing a cause of link failure according to the detailed triggering information causing the link failure; and
transmitting the cause of link failure obtained by analysis to a network side.

2. The method according to claim 1, wherein the detailed triggering information causing the link failure comprises one or more of the following: a physical layer problem, a random access problem of a medium access control layer, and an uplink radio link control layer transmission problem.

3. The method according to claim 1 or 2, wherein the cause of link failure comprises one or more pieces of the following information: a handover configuration problem, an uplink and/or downlink coverage hole, and an uplink link problem.

4. The method according to claim 1 or 2, wherein when the detailed triggering information causing the link failure is a physical layer problem, the step of analyzing a cause of link failure comprises:
determining, when a measurement report has been triggered, that the cause of link failure is a handover configuration problem;
determining, when a measurement report has not been triggered and there exist neighboring cells with good signal quality, that the cause of link failure is a handover configuration problem; and
determining, when a measurement report has not been triggered and there exists no neighboring cell with good signal quality, that the cause of link failure is a coverage hole.

5. The method according to claim 4, wherein when a measurement report has not been triggered and there exists no neighboring cell with good signal quality, it is determined that the cause of link failure is a downlink coverage hole, when there exists recent successful uplink transmission before the link failure; and
it is determined that the cause of link failure is a downlink coverage hole and the uplink is unknown, when there exists no recent successful uplink transmission before the link failure.

6. The method according to claim 1 or 2, wherein when the detailed triggering information causing the link failure is a random access problem of a medium access control layer, the step of analyzing a cause of link failure comprises:
determining, after indication of failure of a random procedure of a medium access control layer is received, that the cause of link failure is an uplink problem associated with the random procedure of a medium access control layer.

7. The method according to claim 1 or 2, wherein when the detailed triggering information causing the link failure is an uplink radio link control layer transmission problem, the step of analyzing a cause of link failure comprises:
determining, when a measurement report is triggered and is not transmitted successfully, that the cause of link failure is a handover configuration problem;
determining, when a measurement report is triggered and is transmitted successfully and a handover completion message is not transmitted successfully, that the cause of link failure is a handover configuration problem;
determining, when a measurement report has not been triggered and there exist neighboring cells with good signal quality, that the cause of link failure is a handover configuration problem;
determining, when a measurement report has not been triggered, there exists no neighboring cell with good signal quality and there exists recent successful downlink transmission before the link failure, that the cause of link failure is an uplink coverage hole; and
determining, when a measurement report has not been triggered, there exists no neighboring cell with good signal quality and there exists no recent successful downlink transmission before the link failure, that the cause of link failure is an uplink coverage hole and the downlink is unknown.

8. An apparatus for analyzing a cause of link failure, comprising:
a first processing unit configured to determine, when link failure occurs, detailed triggering information causing the link failure;
a second processing unit configured to analyze a cause of link failure according to the detailed triggering information causing the link failure; and
a first transmitting unit configured to transmit the cause of link failure obtained by analysis to a network side.

9. The apparatus according to claim 8, wherein when the detailed triggering information causing the link failure is a physical layer problem, the second processing unit is configured to:
determine, when a measurement report has been triggered, that the cause of link failure is a handover configuration problem;
determine, when a measurement report has not been triggered and there exist neighboring cells with good signal quality, that the cause of link failure is a handover configuration problem; and
determine, when a measurement report has not been triggered and there exists no neighboring cell with good signal quality, that the cause of link failure is a coverage hole.

10. The apparatus according to claim 9, wherein the second processing unit is further configured to determine, when a measurement report has not been triggered, there exists no neighboring cell with good signal quality, that the cause of link failure is a downlink coverage hole, when there exists recent successful uplink transmission before the link failure, and determine that the cause of link failure is a downlink coverage hole and the uplink is unknown, when there exists no recent successful uplink transmission before the link failure.

11. The apparatus according to claim 8, wherein when the detailed triggering information causing the link failure is a random access problem of a medium access control layer, the second processing unit is configured to:
determine, after indication of failure of a random procedure of a medium access control layer is received, that the cause of link failure is an uplink problem associated with the random procedure of a medium access control layer.

12. The apparatus according to claim 8, wherein when the detailed triggering information causing the link failure is a radio link control layer transmission problem, the second processing unit is configured to:
determine, when a measurement report is triggered and is not transmitted successfully, that the cause of link failure is a handover configuration problem;
determine, when a measurement report is triggered and is transmitted successfully and a handover completion message is not transmitted successfully, that the cause of link failure is a handover configuration problem;
determine, when a measurement report has not been triggered and there exist neighboring cells with good signal quality, that the cause of link failure is a handover configuration problem;
determine, when a measurement report has not been triggered, there exists no neighboring cell with good signal quality and there exists recent successful downlink transmission before the link failure, that the cause of link failure is an uplink coverage hole; and
determine, when a measurement report has not been triggered, there exists no neighboring cell with good signal quality and there exists no recent successful downlink transmission before the link failure, that the cause of link failure is an uplink coverage hole and the downlink is unknown.

13. A method for analyzing a cause of link failure, comprising:
acquiring a cause of link failure transmitted by a user side; and
determining a cause of link failure, according to the acquired cause of link failure, or according to the acquired cause of link failure in combination with a measurement result.

14. A method of network optimization, comprising:
acquiring a cause of link failure transmitted by a user side;
determining a cause of link failure, according to the acquired cause of link failure, or according to the acquired cause of link failure in combination with a measurement result; and
optimizing a network according to the determined cause of link failure.

15. An apparatus for analyzing a cause of link failure, comprising:
a third processing unit configured to acquire a cause of link failure transmitted by a user side; and
a fourth processing unit configured to determine a cause of link failure, according to the acquired cause of link failure, or according to the acquired cause of link failure in combination with a measurement result.

16. An apparatus of network optimization, comprising:
a fifth processing unit configured to acquire a cause of link failure transmitted by a user side; and
a sixth processing unit configured to determine a cause of link failure, according to the acquired cause of link failure, or according to the acquired cause of link failure in combination with a measurement result; and
a first optimizing unit configured to optimize a network according to the determined cause of link failure.

17. A method for analyzing a cause of link failure, comprising:
determining, when link failure occurs, detailed triggering information causing the link failure; and
transmitting the detailed triggering information, as a cause of link failure, to a network side.

18. An apparatus for analyzing a cause of link failure, comprising:
a seventh processing unit configured to determine, when link failure occurs, detailed triggering information causing the link failure; and
a second transmitting unit configured to transmit the detailed triggering information, as a cause of link failure, to a network side.

19. A method for analyzing a cause of link failure, comprising:
acquiring detailed triggering information causing the link failure transmitted by a user side; and
determining a cause of link failure, according to the acquired detailed triggering information, or according to the acquired detailed triggering information in combination with a measurement result.

20. An apparatus for analyzing a cause of link failure, comprising:
an eighth processing unit configured to acquire detailed triggering information causing the link failure transmitted by a user side; and
a ninth processing unit configured to determine a cause of link failure, according to the acquired detailed triggering information, or according to the acquired detailed triggering information in combination with a measurement result.

21. A method of network optimization, comprising:
acquiring detailed triggering information causing the link failure transmitted by a user side;
determining a cause of link failure, according to the acquired detailed triggering information, or according to the acquired detailed triggering information in combination with a measurement result; and
optimizing a network according to the determined cause of link failure.

22. An apparatus of network optimization, comprising:
a tenth processing unit configured to acquire detailed triggering information causing the link failure transmitted by a user side;
an eleventh processing unit configured to determine a cause of link failure, according to the acquired detailed triggering information, or according to the acquired detailed triggering information in combination with a measurement result; and
a second optimizing unit configured to optimize a network according to the determined cause of link failure.

23. A computer-readable program, wherein when the program is executed in an apparatus for analyzing a cause of link failure, the program enables a computer to carry out the method for analyzing a cause of link failure as claimed in any one of claims 1-7, 13, 17 and 19 in the apparatus.

24. A storage medium in which a computer-readable program is stored, wherein the computer-readable program enables a computer to carry out the method for analyzing a cause of link failure as claimed in any one of claims 1-7, 13, 17 and 19 in an apparatus for analyzing a cause of link failure.

25. A computer-readable program, wherein when the program is executed in an apparatus of network optimization, the program enables a computer to carry out the method of network optimization as claimed in claim 14 or 21 in the apparatus.

26. A storage medium in which a computer-readable program is stored, wherein the computer-readable program enables a computer to carry out the method of network optimization as claimed in claim 14 or 21 in an apparatus of network optimization.
